# EUROPÄISCHE PATENTSCHRIFT

(11) **EP 1 382 829 B1**
(45) Veröffentlichungstag und Bekanntmachung des Hinweises auf die Patenterteilung: **29.10.2008**
(21) Anmeldenummer: 03405426.2
(22) Anmeldetag: 16.06.2003
(51) Int. Cl.: F02F 7/00, F16C 5/00

(54) **Kreuzkopf-Grossdieselmotor**
Large crosshead diesel engine
Grand moteur diesel à crosse de piston

(30) Priorität: 15.07.2002 EP 02405607
(43) Veröffentlichungstag der Anmeldung: 21.01.2004
(73) Patentinhaber: Wärtsilä Schweiz AG, 8401 Winterthur (CH)
(72) Erfinder: Kiser, Silvan, 8400 Winterthur (CH); Sönnichsen, Samuel, 8405 Winterthur (CH)
(74) Vertreter: Sulzer Management AG

(56) Entgegenhaltungen:
- DE-C- 3 512 347
- GB-A- 2 006 920
- NL-C- 20 401
- US-A- 2 045 493
- PATENT ABSTRACTS OF JAPAN vol. 2000, no. 02, 29. Februar 2000 (2000-02-29) & JP 11 325389 A (MITSUBISHI HEAVY IND LTD), 26. November 1999 (1999-11-26)

## Beschreibung

Die Erfindung betrifft einen Kreuzkopf-Grossdieselmotor gemäss dem Oberbegriff des unabhängigen Anspruchs 1.

Ein Grossdieselmotor der Kreuzkopfbauart, wie er bevorzugt im Schiffsbau oder in stationären Anlagen, beispielsweise zur Erzeugung elektrischer Energie zum Einsatz kommt, umfasst drei grosse Gehäusesegmente, die den Rahmen des Motors bilden. Auf einer Grundplatte, die neben einem Lagersattel mit Kurbelwellenhauptlager zur Aufnahme der Kurbelwelle transversale Stützelemente aufweist, ist, getrennt durch eine Bodenplatte, ein sogenannter Ständer angeordnet. Der Ständer umfassst entsprechend der Anzahl der Zylinder des Grossdieselmotors mehrere gegenüber angeordnete Stützkörper, die jeweils eine senkrecht verlaufende Gleitfläche zur Führung zweier benachbarter Kreuzköpfe, die über Schubstangen mit der Kurbelwelle verbunden sind, aufweisen. Dabei werden jeweils zwei gegenüberliegende senkrecht verlaufende Gleitflächen durch eine Mittelwand zusätzlich abgestützt. Die einzelnen Stützkörper sind in der Regel durch ein gemeinsames Deckblech miteinander verbunden. Oberhalb des Ständers ist dann am Deckblech eine Zylindersektion, häufig auch Zylindermantel genannt, angeordnet die zur Aufnahme mehrerer Zylinderliner geeignet ist. Die Grundplatte, der Ständer und die Zylindersektion werden dabei durch Zuganker, die sich im Bereich des Ständers in aller Regel innerhalb der Stützkörper erstrecken, miteinander verbunden, indem die Zuganker in oder an der Grundplatte unter erheblicher Vorspannung verschraubt werden.

Aus der DE 3 512 347 C1 ist ein Ständer mit einer Abstützung für Kreuzkopfgleitbahnen von Kolbenmaschinen bekannt, bei dem die Abstützung doppelwandig ausgestaltet ist. Der Ständer, auf welchem ein Zylindermantel zur Aufnahme von Zylinderlinern plaziert ist, ist auf Bodenblechen auf einer Grundplatte angeordnet, wobei die Bodenbleche zusammen mit schräg verlaufenden Aussenwänden und senkrechten Gleitflächen zwei im Querschnitt trapezförmige Rahmen bilden, die durch ein gemeinsames Deckblech miteinander verbunden sind. Zwischen den Aussenwänden und den Gleitflächen sind die trapezförmigen Rahmen durch transversale Stützwände ausgefüllt, so dass sich als Abstützung ein doppelwandig ausgestalteter Stützkörper ergibt. Die Grundplatte umfasst einen Lagersattel mit einer unteren und einer oberen Lagerschale mit Lagerdeckel, in welcher Lagerschale die Kurbelwelle im Lagersattel der Grundplatte gelagert ist. Zylindermantel, Ständer und Grundplatte des Motors werden von Zugankern zusammengehalten, die unter Vorspannung unterhalb der Kurbelwelle am oder im Lagersattel fixiert sind.

Bei solchen bekannten Kreuzkopf-Grossdieselmotoren sind die doppelwandig ausgestalteten Stützkörper des Ständers auf ebenfalls doppelwandig ausgestalteten Stützelementen in der Grundplatte abgestützt. Das heisst, sowohl der Ständer als auch die Grundplatte sind durch transversale Stützwände doppelwandig ausgestaltet.

Der aus diesem Stand der Technik bekannte Aufbau eines Kreuzkopf-Grossdieselmotors hat dabei einige gravierende Nachteile. Die Stützelemente werden in der Grundplatte durch Schweissnähten fixiert. Wenn die Stützelemente durch zwei gegenüber angeordnete Wände zweiwandig ausgestaltet sind, können die Schweissnähte zwischen zwei Wänden, die in der Grundplatte ein doppelwandiges Stützelement bilden, nicht gegengeschweisst werden, so dass sich entsprechende Probleme mit der Festigkeit bzw. der Stabilität der Grundplatte ergeben. Die Ausrichtung der Grundplatte in Bezug auf den Ständer ist schwierig, weil die Wände des Stützelementes der Grundplatte fluchtend in Bezug auf die Stützwände des Stützkörper im Ständers angeordnet werden müssen. Darüber hinaus sind die Zuganker am unteren Ende des Sattel, also unterhalb der Kurbelwelle fixiert, so dass die Zuganker durch Bohrungen im Lagersattel, durch sogenannte Zugankerpfeifen, bis in einen unteren Bereich des Lagersattel geführt werden müssen. Da die Zuganker unter erheblicher Vorspannung unterhalb des Lagersattel fixiert werden müssen, führt das zu erhebliche Verspannungen im Lagersattel und zu Deformationen der Lagerschale. Damit ist die bekannte Grundplatte relativ steif und rein konstruktiv relativ aufwendig.

Ausgehend von diesem Stand der Technik ist es die Aufgabe der Erfindung, einen verbesserten Kreuzkopf-Grossdieselmotor vorzuschlagen, bei welchem die durch die Ausgestaltung von Grundplatte und Ständer bekannten Nachteile vermieden werden.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Erfindungsgemäss wird somit ein Kreuzkopf-Grossdieselmotor mit einer Grundplatte zur Aufnahme einer Kurbelwelle und einem zwei Aussenwände umfassenden Ständer, welcher auf der Grundplatte angeordnet ist vorgeschlagen, wobei die Grundplatte mindestens einen Lagersattel zur Lagerung der Kurbelwelle aufweist. Der Ständer umfasst mindestens einen Stützkörper, der durch transversale Stützwände doppelwandig ausgestaltet ist und der Gleitflächen für zwei benachbarte Kreuzköpfe aufweist. Auf dem Ständer ist eine Zylindersektion zur Aufnahme von Zylindern angeordnet, wobei die Grundplatte, der Ständer und die Zylindersektion durch mindestens einen Zuganker miteinander verbunden sind, der sich im Bereich des Ständers innerhalb des doppelwandigen Stützkörpers erstreckt. Dabei ist in der Grundplatte ein einwandig ausgestaltetes transversales Stützelement vorgesehen, und der Zuganker ist im oder am Lagersattel in einem Bereich zwischen der Achse der Kurbelwelle und dem Ständer fixiert.

Damit wird erfindungsgemäss ein Kreuzkopf-Grossdieselmotor vorgeschlagen, der eine einwandig ausgestaltete Grundplatte und einen doppelwandigen Ständer aufweist. Dabei sind die Grundplatte, der Ständer und die Zylindersektion des erfindungsgemässen Kreuzkopf-Grossdieselmotors durch Zuganker miteinander verbunden, wobei sich der Zuganker im Bereich des Ständers innerhalb des doppelwandigen Stützkörpers erstreckt und in einem Lagersattel der Grundplatte fixiert ist. Bevorzugt ist dabei die Zylindersektion auf einem Deckblech auf dem Ständer plaziert und der Ständer auf einem Bodenblech auf der Grundplatte angeordnet.

Dabei wurde bisher aus Stabilitätsgründen eine doppelwandige Ausführung der Grundplatte als zwingend notwendig erachtet, wenn der Ständer aus doppelwandig ausgestalteten Stützkörper aufgebaut ist. Da die Zuganker unter erheblicher Vorspannung in der Grundplatte verankert werden müssen, wurde bei einer Kombination von doppelwandigem Stützkörper im Ständer mit einwandigem Stützelement in der Grundplatte, sowohl im unteren Bereich des Ständers und in den Bodenblechen, als auch im Bereich des Lagersattels aufgrund von Biegebelastungen mit nicht vertretbaren mechanischen Spannungen im Material gerechnet. Darüber hinaus war das Problem des sogenannten "fretting", das bei einer Kombination von einwandiger Grundplatte mit doppelwandigem Ständer zu erwarten ist, bisher ungelöst. Unter "fretting" versteht man eine bestimmte Art von Reibkorrosion, die an den Kontaktflächen zwischen Ständer und Grundplatte auftreten kann. Aus den zuvor genannten Gründen galt daher bislang eine Kombination von doppelwandig ausgestaltetem Ständer mit einer einwandig ausgestalteten Grundplatte als nicht praktikabel. Es hat sich jedoch gezeigt, dass diese Probleme durch einen definierten Kraftfluss vermieden werden können, wenn der Ständer und die Grundplatte im Bereich des Zugankers entsprechend ausgestaltet werden.

In einer bevorzugten Ausführungsform des erfindungsgemässen Kreuzkopf-Grossdieselmotors erstrecken sich die transversalen Stützwände des Stützkörpers, an welchen Stützwänden die Gleitflächen für je zwei benachbarte Kreuzköpfe angeordnet sind, im Ständer V-förmig in Richtung zur Zylindersektion, d.h. die transversalen Stützwände erstrecken sich mit sich vergrösserndem Abstand nach oben in Richtung zur Zylindersektion. Dabei kann zur Abstützung zwischen zwei gegenüberliegenden Gleitflächen zusätzlich eine Mittelwand angeordnet sein.

Dabei ist im Rahmen dieser Anmeldung unter einer "transversalen" Orientierung, wie üblich eine Orientierung zu verstehen, die im wesentlichen senkrecht zu der Richtung liegt, in welche sich die Achse der Kurbelwelle des Grossdieselmotors erstreckt.

Da bekanntlich die Normalkräfte, die der Kreuzkopf auf die Gleitbahnen, die von den Stützwänden des Stützkörpers getragen werden, nahe dem oberen Totpunkt der Bewegung eines mit dem Kreuzkopf verbundenen Kolbens, welcher Kolben in einem Zylinder des Kreuzkopf-Grossdieselmotors in bekannter Weise hin- und herbewegbar angeordnet ist, am grössten sind, können diese durch die V-förmige Ausgestaltung des Stützkörpers, insbesondere im oberen Bereich des Ständers, besonders gut aufgenommen und abgeleitet werden. Selbstverständlich können, insbesondere aufgrund konstruktiver Vorgaben, die transversalen Stützwände des Stützkörpers auch parallel zueinander angeordnet sein.

Bevorzugt, jedoch nicht notwendigerweise, erstreckt sich der Zuganker im Bereich des Ständers mittig zwischen den transversalen Stützwänden des Stützkörpers, wobei das einwandig ausgestaltete Stützelement in der Grundplatte bevorzugt fluchtend zur Längsachse des Zugankers angeordnet ist.

Die Grundplatte weist dabei mindestens einen Lagersattel zur Lagerung der Kurbelwelle auf, wobei der Zuganker im oder am Lagersattel fixiert ist. In einem bevorzugten Ausführungsbeispiel ist der Zuganker in einem Bereich zwischen der Achse der Kurbelwelle und dem Ständer fixiert. Da der Zuganker, wie bereits erwähnt, unter erheblicher Vorspannung in oder an der Grundplatte verankert werden muss, werden durch die Fixierung des Zugankers in einem Bereich zwischen der Achse der Kurbelwelle und dem Ständer insbesondere bei den Lagerschalen, in denen die Kurbelwelle in bekannter Weise im Lagersattel gelagert ist, Deformationen aufgrund von Zugbelastungen durch den Zuganker weitgehend vermieden.

Als besonders vorteilhaft erweist es sich, wenn sich der Zuganker im Bereich des Ständers mittig zwischen den transversalen Stützwänden des Stützkörpers erstreckt und das einwandig ausgestaltete Stützelement in der Grundplatte fluchtend zur Längsachse des Zugankers angeordnet und der Zuganker in einem Bereich zwischen der Achse der Kurbelwelle und dem Ständer fixiert ist. Selbstverständlich muss sich der Zuganker nicht notwendigerweise mittig zwischen den transversalen Stützwänden erstrecken und das einwandige Stützelement muss auch nicht in jedem Fall fluchtend zur Längsachse des Zugankers angeordnet sein.

In einer bevorzugten Ausführungsform des erfindungsgemässen Kreuzkopf-Grossdieselmotors ist der Zuganker im Lagersattel in einer Gewindebohrung fixiert. Dabei erstrecken sich zwischen zwei benachbarten Kreuzköpfen bevorzugt genau zwei Zuganker, wobei es ach möglich ist, dass sich zwischen zwei benachbarten Kreuzköpfen, insbesondere aus Stabilitätsgründen, mehr als ein Zuganker erstreckt.

Die Erfindung wird im folgenden an Hand der Zeichnung näher erläutert. Es zeigen in schematischer Darstellung:
- Fig. 1: Schnitt durch einen Kreuzkopf-Grossdieselmotor mit Grundplatte, Ständer und Zylindersektion;
- Fig. 2: einen Schnitt l - l gemäss Fig. 1 mit doppelwandigem Stützkörper und einwandig ausgestaltetem Stützelement;
- Fig. 3: einen Schnitt ll - ll gemäss Fig. 1 mit je zwei doppelwandigen Stützkörpern zwischen zwei benachbarten Kreuzköpfen.

Der erfindungsgemässe Kreuzkopf-Grossdieselmotor, der im folgenden gesamthaft mit dem Bezugszeichen 1 bezeichnet wird, ist insbesondere als Zweitakt-Grossdieselmotor 1 mit Längsspülung ausgelegt, wie er beispielsweise im Schiffsbau verbreitet Verwendung findet.

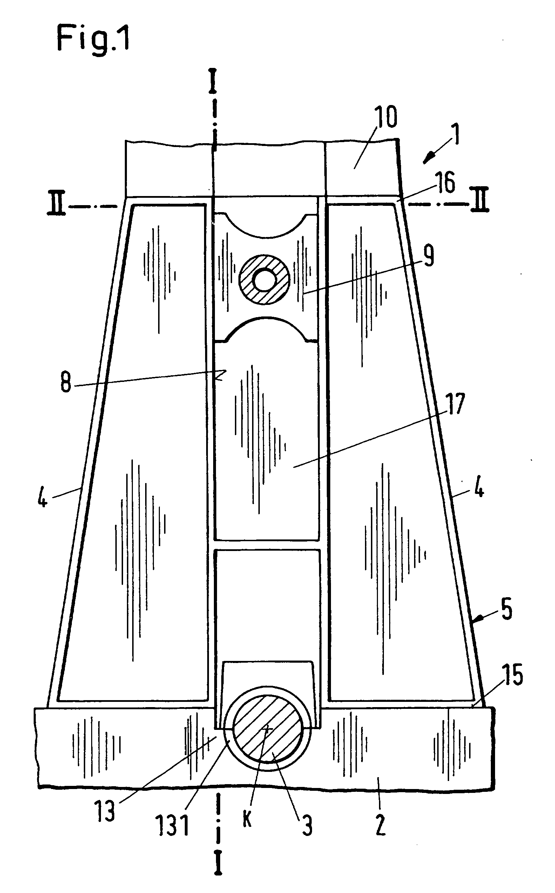

Fig. 1 zeigt schematisch im Schnitt einen bekannten Aufbau eines Kreuzkopf-Grossdieselmotors 1 mit Grundplatte 2, Ständer 5 und Zylindersektion 10. Die Zylindersektion 10 dient in an sich bekannter Weise zur Aufnahme von nicht dargestellten Zylindern. Der Ständer 5, der beispielsweise durch Zusammenschweissen von Stahlblechen entstanden ist, weist ein Bodenblech 15 sowie zwei Aussenwände 4 auf und bildet gemeinsam mit den darstellungsgemäss senkrecht verlaufenden Gleitflächen 8 zwei im Querschnitt trapezförmige Rahmen, die durch ein gemeinsames Deckblech 16 miteinander verbunden sind. Die zwei gegenüberliegenden senkrecht verlaufenden Gleitflächen 8 werden durch eine Mittelwand 17, die zwischen den beiden trapezförmigen Rahmen angeordnet ist, abgestützt. Der Ständer 5 ist mit dem Bodenblech 15 auf der Grundplatte 2 angeordnet, die einen Lagersattel 13 mit Lagerschale 131 zur Lagerung einer Kurbelwelle 3 umfasst. Die Kurbelwelle 3 mit Achse K ist in an sich bekannter Weise mit einem Kreuzkopf 9 über eine in Fig. 1 nicht gezeigte Schubstange 18 verbunden.

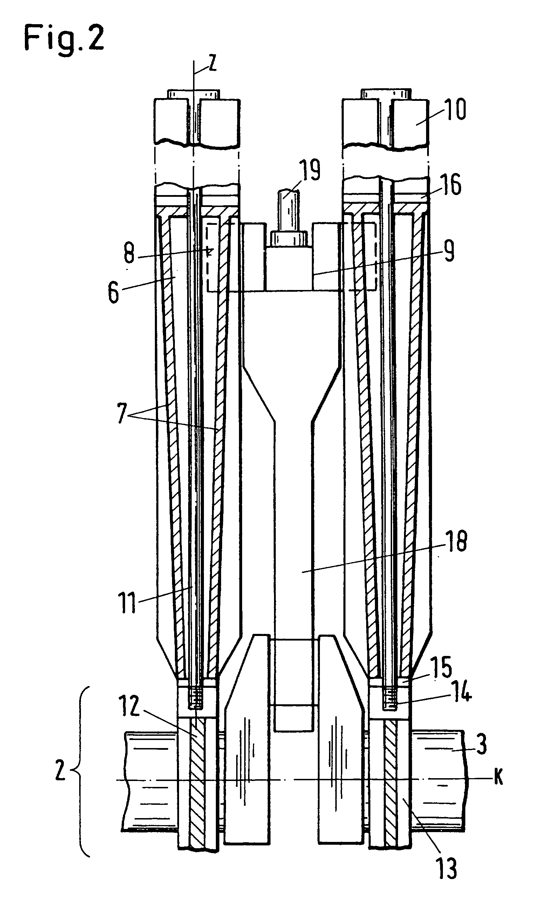

Fig. 2 zeigt einen Schnitt gemäss Fig. 1 entlang der Schnittlinie l - l durch ein bevorzugtes Ausführungsbeispiel eines erfindungsgemässen Kreuzkopf-Grossdieselmotors 1, umfassend den Ständer 5, der auf der Grundplatte 2 angeordnet ist sowie die Zylindersektion 10, die auf dem Ständer 5 plaziert ist. Zwischen dem Ständer 5 und der Zylindersektion 10 ist ein Deckblech 16 und zwischen dem Ständer 10 und der Grundplatte 2 ein Bodenblech 15 angeordnet. Die Zylindersektion 10 ist in bekannter Weise zur Aufnahme eines oder mehrerer nicht gezeigter Zylinder geeignet. Der Innenraum des Zylinders bildet in bekannter Weise zusammen mit einem nicht gezeigten Zylinderdeckel und einem ebenfalls nicht gezeigten Kolben, der mittels einer Kolbenstange 19 mit dem Kreuzkopf 9 verbunden und im Zylinder hin- und herbewegbar angeordnet ist, einen Brennraum des Kreuzkopf-Grossdieselmotors 1. Der Ständer 5 umfasst einen Stützkörper 6, der durch transversale Stützwände 7 doppelwandig ausgestaltet ist. Die Stützwände 7 tragen eine Gleitfäche 8 zur Führung des Kreuzkopfes 9, der mittels einer Schubstange 18 mit der Kurbelwelle 3 und mit der Kolbenstange 19 mit einem nicht dargestellten Kolben des Kreuzkopf-Grossdieselmotors 1 verbunden ist.

Die Grundplatte 2 umfasst zur Aufnahme und Lagerung der Kurbelwelle 3 einen Lagersattel 13 sowie ein transversales Stützelement 12, das einwandig ausgestaltet ist. Zylindersektion 10, Ständer 5 und Grundplatte 2 sind durch einen Zuganker 11 unter Vorspannung miteinander verbunden. Dabei erstreckt sich der Zuganker 11 im Bereich des Ständers 5 zwischen den transversalen Stützwänden 7 innerhalb des doppelwandigen Stützkörpers 6 und ist im Lagersattel 13 der Grundplatte 2 in einem Bereich zwischen der Achse K der Kurbelwelle 3 und dem Ständer 5, also darstellungsgemäss oberhalb der Achse K der Kurbelwelle 3, in einer Gewindebohrung 14 fixiert.

Bei dem in Fig.2 dargestellten Ausführungsbeispiel erstrecken sich die transversalen Stützwände 7 des Stützkörpers 6 V-förmig in Richtung der Zylindersektion 10, das heisst der gegenseitige Abstand der Stützwände 7 eines Stützkörpers 6 vergrössert sich zunehmend in Richtung zur Zylindersektion 10. Die Normalkräfte, die der Kreuzkopf 9 über die Gleitfächen 8 auf die Stützwände 7 und damit auf den Stützkörper 6 überträgt, sind bekanntlich nahe am oberen Totpunkt der Hin- und Herbewegung des Kolbens am grössten. Durch die V-förmige Gestaltung des Stützkörpers 6 ist dieser im darstellungsmässig oberen Bereich des Ständers 5 relativ breit und kann daher die Normalkräfte des Kreuzkopfes 9 besonders gut aufnehmen bzw. in den Ständer 5 ableiten.

In dem in Fig. 2 dargestellten besonders bevorzugten Ausführungsbeispiel erstreckt sich der Zuganker 11 mit seiner Längsachse Z mittig zwischen den transversalen Stützwänden 7 des Stützkörpers 6, wobei das einwandig ausgestaltete Stützelement 12 der Grundplatte 2, auf dem sich der Stützkörper 6 in der Grundplatte 2 abstützt, fluchtend zur Längsachse Z des Zugankers 11 angeordnet ist. Der Zuganker 11 ist, insbesondere um Deformationen der Lagerschalen 131 zu vermeiden, in einem Bereich zwischen der Achse K der Kurbelwelle 3 und dem Ständer 5, darstellungsgemäss also oberhalb der Achse K der Kurbelwelle, im Lagersattel 13 in einer Gewindebohrung 14 fixiert. Dadurch, dass das einwandige Stützelement 12 in der Grundplatte 2 fluchtend zur Längsachse Z des Zugankers 11 und damit symmetrisch in Bezug auf die Stützwände 7 des Stützkörpers 6 angeordnet ist, ergibt sich eine besonders hohe Stabilität, ohne dass die Grundplatte eine zu hohe Steifigkeit aufweist.

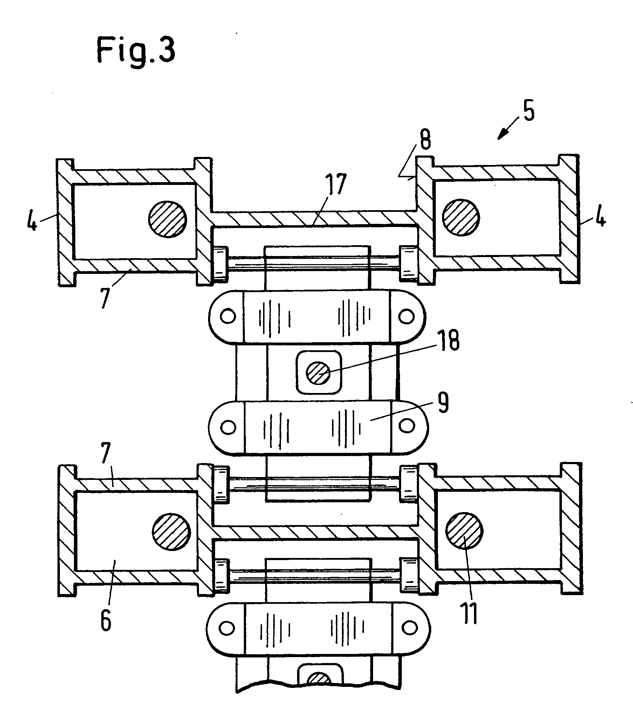

Fig. 3 zeigt schliesslich einen weiteren Schnitt gemäss Fig. 1 entlang der Linie II - II. Dargestellt sind je zwei im Ständer 5 gegenüber angeordnete Stützkörper 6, die durch die Mittelwand 17 zwischen den Gleitflächen 8 gegeneinander abgestützt sind. Der Kreuzkopf 9 wird zwischen je zwei gegenüberliegenden Gleitflächen 8 von jeweils zwei benachbarten Stützkörpern 6 geführt. In jedem Stützkörper 6 erstreckt sich zwischen den Stützwänden 7 genau ein Zuganker 11.

Die Grundplatte des erfindungsgemässen Kreuzkopf-Grossdieselmotors weist ein einwandig ausgestaltetes transversales Stützelement auf, das beim Zusammenbau des Motors problemlos gegengeschweisst werden kann, so dass die Probleme mit der Festigkeit bzw. der Stabilität der Grundplatte, wie sie sich bei der aus dem Stand der Technik bekannten Grundplatte mit doppelwandigen Stützelementen ergeben, vermieden werden. Die Zuganker sind bevorzugt als kurze Zuganker ausgeführt und in einem oberen Bereich des Sattels, das heisst zwischen der Achse der Kurbelwelle und dem Bodenblech des Ständers in einer Gewindebohrung fixiert. Dadurch werden Verspannungen im Lagersattel sowie Deformationen der Lagerschale durch den unter erheblicher Vorspannung im Lagersattel fixierten Zuganker weitestgehend vermieden. Die Steifigkeit der Grundplatte des erfindungsgemässen Kreuzkopf-Grossdieselmotors wird insbesondere durch die kurzen Zuganker und die einwandig ausgestalteten Stützelemente optimiert. Da die Zuganker unter erheblicher Vorspannung in der Grundplatte verankert werden müssen, wurde bisher eine Kombination von doppelwandigem Stützkörper im Ständer mit einwandigem Stützelement in der Grundplatte nicht in Betracht gezogen, da sowohl im unteren Bereich des Ständers und in den Bodenblechen, als auch im Bereich des Lagersattels mit nicht zu vermeidenden Biegebelastungen und daraus resultierenden nicht vertretbaren mechanischen Spannungen im Material gerechnet. Durch entsprechende Gestaltung des Ständers und der Grundplatte im Bereich des Zugankers konnten sowohl die bisher befürchteten Probleme durch Biegebelastungen, als auch das bei einer solchen Konstruktion erwartete Fretting vermieden werden. Insbesondere ist die Bodenplatte des erfindungsgemässen Grossdieselmotors konstruktiv deutlich vereinfacht worden.

## Patentansprüche

1. Kreuzkopf-Grossdieselmotor mit einer Grundplatte (2) zur Aufnahme einer Kurbelwelle (3), einem zwei Aussenwände (4) umfassenden Ständer (5), welcher auf der Grundplatte (2) angeordnet ist, wobei die Grundplatte (2) mindestens einen Lagersattel (13) zur Lagerung der Kurbelwelle (3) aufweist und mindestens einen Stützkörper (6) umfasst, der durch transversale Stützwände (7) doppelwandig ausgestaltet ist, und der Gleitflächen (8) für zwei benachbarte Kreuzköpfe (9) aufweist, sowie eine auf dem Ständer (5) angeordnete Zylindersektion (10) zur Aufnahme von Zylindern, wobei die Grundplatte (2), der Ständer (5) und die Zylindersektion (10) durch mindestens einen Zuganker (11) miteinander verbunden sind, der sich im Bereich des Ständers (5) innerhalb des doppelwandigen Stützkörpers (6) erstreckt, **dadurch gekennzeichnet, dass** in der Grundplatte (2) ein einwandig ausgestaltetes transversales Stützelement (12) vorgesehen ist, und der Zuganker (11) im oder am Lagersattel (13) in einem Bereich zwischen der Achse (K) der Kurbelwelle (3) und dem Ständer (5) fixiert ist.

2. Kreuzkopf-Grossdieselmotor nach Anspruch 1, wobei die transversalen Stützwände (7) mindestens eines Stützkörpers (6) parallel zueinander angeordnet sind.

3. Kreuzkopf-Grossdieselmotor nach Anspruch 1 oder 2, wobei sich die transversalen Stützwände (7) mindestens eines Stützkörpers (6) in Richtung der Zylindersektion (10) mit sich vergrösserndem Abstand V-förmig erstrecken.

4. Kreuzkopf-Grossdieselmotor nach einem der vorangehenden Ansprüche, wobei sich der Zugankers (11) mittig zwischen den transversalen Stützwänden (7) des Stützkörpers (6) erstreckt.

5. Kreuzkopf-Grossdieselmotor nach einem der vorangehenden Ansprüche, wobei das Stützelement (12) fluchtend zur Längsachse (Z) des Zugankers (11) angeordnet ist.

6. Kreuzkopf-Grossdieselmotor nach einem der vorangehenden Ansprüche, wobei der Zuganker (11) im Lagersattel (13) in einer Gewindebohrung (14) fixiert ist.

7. Kreuzkopf-Grossdieselmotor nach einem der vorangehenden Ansprüche, wobei sich der Zuganker (11) durch eine Bohrung im Lagersattel (13) erstreckt und durch eine Verschraubung fixiert ist.

8. Kreuzkopf-Grossdieselmotor nach einem der vorangehenden Ansprüche, wobei sich zwischen zwei benachbarten Kreuzköpfen (9) genau zwei Zuganker (11) erstrecken.

9. Kreuzkopf-Grossdieselmotor nach einem der vorangehenden Ansprüche, wobei der Ständer (5) ein Bodenblech (15), ein Deckblech (16) und eine zwischen zwei gegenüberliegenden Gleitflächen (8) angeordnete Mittelwand (17) umfasst.

## Claims

1. A crosshead large diesel engine comprising a base plate (2) for the reception of a crankshaft (3), a stator (5) which includes two outer walls (4), is arranged on the base plate (2), wherein the base plate (2) has at least one bearing saddle (13) for the support of the crankshaft (3) and includes at least one supporting body (6) which is of double wall design through the use of transverse support walls (7) and has sliding surfaces (8) for two adjacent crossheads (9), as well as a cylinder section (10) arranged on the stator (5) for the reception of cylinders, with the base plate (2), the stator (5) and the cylinder section (10) being connected to one another by at least one tie rod (11) which extends in the region of the stator (5) within the double wall supporting body (6), **characterised in that** a single wall transverse support element (12) is provided in the base plate (2) and wherein the tie rod (11) is fixed in or at the bearing saddle (13) in a region between the axis (K) of the crankshaft (3) and the stator (5).

2. A crosshead large diesel engine in accordance with claim 1, wherein the transverse support walls (7) of at least one supporting body (6) are arranged parallel to one another.

3. A crosshead large diesel engine in accordance with claim 1 or claim 2, wherein the transverse support walls (7) of at least one supporting body (6) extend in the direction of the cylinder section (10) in a V shape with an increasing spacing.

4. A crosshead large diesel engine in accordance with any one of the preceding claims, wherein the tie rod (11) extends centrally between the transverse support walls (7) of the supporting body (6).

5. A crosshead large diesel engine in accordance with any one of the preceding claims, wherein the support element (12) is arranged aligned with the longitudinal axis (Z) of the tie rod (11).

6. A crosshead large diesel engine in accordance with any one of the preceding claims, wherein the tie rod (11) is fixed in the bearing saddle (13) in a tapped bore (14).

7. A crosshead large diesel engine in accordance with any one of the preceding claims, wherein the tie rod (11) extends through a bore in the bearing saddle (13) and is fixed by a screw connection.

8. A crosshead large diesel engine in accordance with any one of the preceding claims, wherein precisely two tie rods (11) extend between two adjacent crossheads

9. A crosshead large diesel engine in accordance with any one of the preceding claims, wherein the stator (5) includes a sheet metal base plate (15), a top metal sheet (16) and a central wall (17) arranged between two oppositely disposed sliding surfaces (8).

## Revendications

1. Grand moteur diesel à crosse de piston avec une plaque de base (2) pour la réception d'un vilebrequin (3), un montant (5) comprenant deux parois extérieures (4), qui est disposé sur la plaque de base (2), où la plaque de base (2) présente au moins un palier en selle (13) pour le logement du vilebrequin (3) et comprend au moins un corps d'appui (6), qui est réalisé à paroi double par des parois de soutien transversales (7), et qui présente des faces de glissement (8) pour deux crosses avoisinantes (9), ainsi qu'une section de cylindre (10) disposée sur le montant (5) pour la réception de cylindres, où la plaque de base (2), le montant (5) et la section de cylindre (10) sont reliées par au moins un tirant (11) qui s'étend dans la zone du montant (5) à l'intérieur du corps de soutien (6) à paroi double, **caractérisé en ce qu'**il est prévu dans la plaque de base (2) un élément de soutien transversal (12) à une paroi et que le tirant (11) est fixé dans ou au palier en selle (13) dans une zone entre l'axe (K) du vilebrequin (3) et le montant (5).

2. Grand moteur diesel à crosse de piston selon la revendication 1, où les parois de soutien transversale (7) d'au moins un corps de soutien (6) sont disposées parallèlement l'une à l'autre.

3. Grand moteur diesel à crosse de piston selon la revendication 1 ou 2, où les parois de soutien transversales (7) d'au moins un corps de soutien (6) s'étendent en forme de V, en direction de la section de cylindre (10) avec un écart grandissant.

4. Grand moteur diesel à crosse de piston selon l'une des revendications précédentes, où le tirant (11) s'étend au milieu entre les parois de soutien transversales (7) du corps de soutien (6).

5. Grand moteur diesel à crosse de piston selon l'une des revendications précédentes, où l'élément de soutien (12) est disposé en alignement avec l'axe longitudinal (Z) du tirant (11).

6. Grand moteur diesel à crosse de piston selon l'une des revendications précédentes, où le tirant (11) est fixé dans le palier en selle (13) dans un trou taraudé (14).

7. Grand moteur diesel à crosse de piston selon l'une des revendications précédentes, où le tirant (11) s'étend à travers un perçage dans le palier en selle (13) et est fixé par un vissage.

8. Grand moteur diesel à crosse de piston selon l'une des revendications précédentes, où s'étendent entre deux crosses avoisinantes (9) exactement deux tirants (11).

9. Grand moteur diesel à crosse de piston selon l'une des revendications précédentes, où le montant (5) comprend une tôle de fond (15), une tôle de recouvrement (16) et une paroi médiane (17) disposée entre deux faces de glissement opposées (8).
